# EUROPÄISCHE PATENTSCHRIFT

(11) **EP 3 303 098 B1**
(45) Veröffentlichungstag und Bekanntmachung des Hinweises auf die Patenterteilung: **17.07.2019**
(21) Anmeldenummer: 16717967.0
(22) Anmeldetag: 25.04.2016
(51) Int. Cl.: B62D 7/06, B62D 7/20, B60G 3/20, B60G 7/00

(54) **RADAUFHÄNGUNGSANORDNUNG**
WHEEL SUSPENSION SYSTEM
SYSTÈME DE SUSPENSION

(30) Priorität: 28.05.2015 DE 102015209844
(43) Veröffentlichungstag der Anmeldung: 11.04.2018
(73) Patentinhaber: ZF Friedrichshafen AG, 88046 Friedrichshafen (DE)
(72) Erfinder: NEU, Alexander, 88048 Friedrichshafen (DE); HEIDSIECK, Knut, 32257 Buende (DE); KONTERMANN, Peter, 49090 Osnabrück (DE); LOHMÜLLER, Holger, 49191 Belm (DE); KNAUB, Witalij, 49504 Lotte (DE); CICHY, Joachim, 88085 Langenargen (DE); SOLIK, Klaus, 97506 Grafenrheinfeld (DE)
(86) Internationale Anmeldenummer: PCT/EP2016/059153
(87) Internationale Veröffentlichungsnummer: WO 2016/188686

(56) Entgegenhaltungen:
- EP-A1- 2 338 707
- EP-A2- 1 500 575
- CN-A- 103 287 493
- DE-A1-102013 216 029
- US-A- 3 379 455
- US-A- 5 609 331
- US-B1- 6 719 314

## Beschreibung

Die vorliegende Erfindung betrifft eine Radaufhängungsanordnung für ein Fahrzeug mit den oberbegrifflichen Merkmalen nach Anspruch 1.

Bei Radaufhängungen für neuartige Mobilitätskonzepte, die z. B. Lenkwinkel von wenigstens +/- 50° bis zu +/- 90° ermöglichen, wird die Fahrwerkskinematik im Vergleich zu herkömmlichen Achsanordnungen mit maximalen Lenkwinkeln von +/- 50° komplexer, da zusätzliche Bauelemente benötigt werden. Trotz der zusätzlich nötigen Bauelemente in der Radaufhängung bleibt der für die Radaufhängung zur Verfügung stehende Bauraum gleich. Häufig wird ein Bauraumvolumen für die Radaufhängung festgelegt, welches nicht überschritten werden darf. Daher ist eine effektive und optimierte Nutzung des zur Verfügung stehenden Bauraums obligatorisch.

Aus der DE 10 2015 203 632 A1 ist eine Radaufhängung mit einem Radträger, zwei Koppelstangen, und mindestens einer Spurstange bekannt, wobei die erste Koppelstange und die zweite Koppelstange gelenkig miteinander verbunden sind und die zweite Koppelstange und der Radträger gelenkig miteinander verbunden sind. Ein Lenkmoment wird von der ersten Koppelstange über die zweite Koppelstange auf den Radträger übertragen. Die Radaufhängung weist wenigstens einen Fahrwerklenker auf, wobei der Fahrwerklenker gelenkig in einer Fahrzeugkarosserie oder einem Fahrzeugrahmen gelagert und gelenkig mit dem Radträger verbunden ist. Der Fahrwerklenker und die erste Koppelstange sind gelenkig miteinander verbunden.

Das Dokument EP 1 500 575 A2 offenbart eine Radaufhängung gemäß dem Oberbegriff des Anspruchs 1.

Der vorliegenden Erfindung liegt ausgehend vom Stand der Technik die Aufgabe zu Grunde, eine verbesserte Radaufhängungsanordnung vorzuschlagen, deren einzelne Bauelemente bezogen auf einen limitierten zur Verfügung stehenden Bauraum für diese Radaufhängung so zueinander angeordnet sind, dass dieser Bauraum effizient genutzt wird. Die einzelnen Bauelemente sollen hierbei so kompakt wie möglich verbaut und zueinander angeordnet werden. Bezogen auf die Achskinematik und die Funktionalität der Radaufhängung soll die Radaufhängungsanordnung im Vergleich zu einer herkömmlichen Radaufhängung keine Einschränkungen herbeiführen.

Die vorliegende Erfindung schlägt ausgehend von der vorgenannten Aufgabe eine Radaufhängungsanordnung für ein Fahrzeug mit den Merkmalen nach Patentanspruch 1 vor. Weitere vorteilhafte Ausgestaltungen und Weiterbildungen gehen aus den Unteransprüchen hervor.

Eine Radaufhängungsanordnung für ein Fahrzeug umfasst einen Federdämpfer, einen ersten Querlenker, welcher eine erste Querlenkerstrebe und eine zweite Querlenkerstrebe aufweist, einen zweiten Querlenker, eine erste Spurstange, eine zweite Spurstange, einen Umlenkhebel, einen Radträger, ein Lenkgetriebe und eine Pendelstütze. Jeder Querlenker weist ein radträgerseitiges Ende und zwei karosserieseitige Enden auf. Das Lenkgetriebe ist in einer Ebene mit dem ersten Querlenker angeordnet, wobei das Lenkgetriebe in einem Teilbereich zwischen einem ersten karosserieseitigen Ende der ersten Querlenkerstrebe des ersten Querlenkers und einem zweiten karosserieseitigen Ende der zweiten Querlenkerstrebe des ersten Querlenkers angeordnet ist. Die Radaufhängungsanordnung weist zudem einen Stabilisator auf und ist als eine Einzelradaufhängung ausgebildet.

Unter einer Radaufhängung ist im Allgemeinen eine Vorrichtung zur Anbindung wenigstens eines Rads an eine Fahrzeugkarosserie und/oder an einen Fahrzeugrahmen zu verstehen. In der Regel erfolgt die Anbindung federbar, z. B. bei einer Vorderachse auch lenkbar. Die Radaufhängung verbindet also den Radträger mit der Fahrzeugkarosserie und/oder dem Fahrzeugrahmen derart, dass ein an dem Radträger drehbar gelagertes Rad federbar und gegebenenfalls lenkbar ist.

Unter einem Federdämpfer ist eine Vorrichtung zu verstehen, die einen Stoßdämpfer mit einer Feder kombiniert. Die Feder ist als eine Spiralfeder ausgestaltet und umringt den Stoßdämpfer in einem Teilbereich. Die Feder und der Stoßdämpfer arbeiten in derselben Bewegungsrichtung. Der Federdämpfer hier ist z. B. handelsüblich ausgestaltet.

Die Querlenker sind, wenn die Radaufhängung in einem Fahrzeug verwendet wird, quer zu einer Fahrtrichtung eingebaut. Der erste Querlenker weist eine erste Querlenkerstrebe und eine zweite Querlenkerstrebe auf. Die erste Querlenkerstrebe des ersten Querlenkers weist ein erstes karosserieseitiges Ende auf. Die zweite Querlenkerstrebe des ersten Querlenkers weist ein zweites karosserieseitiges Ende auf. Der erste Querlenker weist zudem ein radträgerseitiges Ende auf. Der zweite Querlenker weist ein erstes karosserieseitiges Ende und ein zweites karosserieseitiges Ende, sowie ein radträgerseitiges Ende auf. Das karosserieseitige Ende einer Querlenkerstrebe oder eines Querlenkers ist dasjenige Ende, welches sich bei der Verwendung des Querlenkers in einem Fahrzeug an einer Fahrzeugkarosserie oder einem Fahrzeugrahmen abstützt. Das radträgerseitige Ende eines Querlenkers ist dasjenige Ende, welches bei der Verwendung des Querlenkers in einem Fahrzeug mit dem Radträger der Radaufhängung verbunden ist. Beide Querlenker sind vorzugsweise als Dreiecksquerlenker ausgeformt. Der erste Querlenker ist ein oberer Querlenker, der zweite Querlenker ist ein unterer Querlenker. Die Nummerierung dient hier und im gesamten Text nur der leichteren Unterscheidbarkeit und deutet keine Vorrangigkeit an.

Eine Spurstange ist Bestandteil eines Lenkmechanismus und dient dazu, ein Lenkmoment auf den Radträger zu übertragen. Beim Lenken vollzieht die Spurstange eine translatorische Bewegung und/ oder eine Verschiebung wenigstens teilweise in Fahrzeugquerrichtung. Beim Lenken gibt es also eine Bewegungskomponente der Spurstange, die in Fahrzeugquerrichtung verläuft. Unter Fahrzeugquerrichtung ist eine Richtung orthogonal zur Fahrzeuglängsrichtung zu verstehen, die zudem horizontal verläuft. Die Fahrzeuglängsrichtung stimmt mit der Fahrtrichtung beim Geradeausfahren überein.

Unter einem Umlenkhebel ist ein Bauelement der Radaufhängung zu verstehen, welches an der Lenkbewegung mitwirkt. Der Umlenkhebel leitet eine Lenkbewegung, welche von dem Lenkgetriebe an die erste Spurstange weitergeleitet wurde an die zweite Spurstange weiter. Unter einem Radträger ist dasjenige Bauelement der Radaufhängungsanordnung zu verstehen, welches bei der Verwendung der Radaufhängungsanordnung in einem Fahrzeug mit einem Rad des Fahrzeugs verbunden ist.

Das Lenkgetriebe übersetzt die Drehbewegung eines Lenkrads des Fahrzeugs in Schwenkbewegungen der gelenkten Räder des Fahrzeugs. Unter einem Lenkgetriebe ist hier beispielsweise ein Zahnstangenlenkgetriebe zu verstehen. Unter einer Pendelstütze ist ein stabförmiges Bauelement zu verstehen, welches keine Momente oder Querkräfte übertragen kann, sondern nur Längskräfte. Die Längskraft verläuft hierbei genau durch die beiden Lagerpunkte der Pendelstütze. Die Pendelstütze erstreckt sich von einem Lagerpunkt zu einem anderen Lagerpunkt.

Das Lenkgetriebe ist in Konstruktionslage in einer Ebene mit dem ersten Querlenker angeordnet. Diese Ebene wird von den karosserieseitigen Enden und dem radträgerseitigen Ende des ersten Querlenkers aufgespannt. In anderen Worten weisen der erste Querlenker und das Lenkgetriebe bei einer Verwendung der Radaufhängungsanordnung in einem Fahrzeug den gleichen Abstand zu einer Fahrbahn auf. Der erste Querlenker ist derart ausgeformt, dass dessen zwei Querlenkerstreben nur an dem radträgerseitigen Ende verbunden sind. Zwischen den karosserieseitigen Enden des Querlenkers ist somit materialfreier Bauraum. In diesem materialfreien Bauraum ist in Konstruktionslage ein Teilbereich des Lenkgetriebes angeordnet. Dies heißt, dass das Lenkgetriebe nicht in seiner Gesamtheit zwischen den karosserieseitigen Enden der Querlenkerstreben des ersten Querlenkers angeordnet ist. Lediglich ein Abschnitt des Lenkgetriebes ist derartig angeordnet. Unter der Anordnung zwischen den karosserieseitigen Enden des ersten Querlenkers ist eine rein räumliche Anordnung zu verstehen, es besteht somit kein funktioneller Zusammenhang.

Die genaue Positionierung des Lenkgetriebes ist zum einen festgelegt durch einen Bauraumbedarf des Lenkgetriebes in Konstruktionslage und zum anderen durch einen Bauraumbedarf des Lenkgetriebes in einem Fahrzeugbetriebszustand, wenn die Radaufhängungsanordnung in einem Fahrzeug verwendet wird. Weiterhin ist die Positionierung des Lenkgetriebes festgelegt durch einen Bauraumbedarf des ersten Querlenkers und der benachbarten Bauelemente, z. B. der zweiten Spurstange oder des Federdämpfers, sowohl in einer Konstruktionslage als auch in einem Fahrzeugbetriebszustand.

Durch die Anordnung des Lenkgetriebes in einer Ebene mit dem ersten Querlenker und durch die Anordnung des Teilbereichs des Lenkgetriebes zwischen dem karosserieseitigen Ende der ersten Querlenkerstrebe des ersten Querlenkers und dem karosserieseitigen Ende der zweiten Querlenkerstrebe des ersten Querlenkers kann, im Gegensatz zu einer herkömmlichen Radaufhängung, der für die Radaufhängungsanordnung zur Verfügung stehende Bauraum effizient und optimiert genutzt werden. Vorteilhafterweise wird mit der erfindungsgemäßen Radaufhängungsanordnung im Gegensatz zu einer herkömmlichen Radaufhängung Bauraum eingespart. Die gesamte obere Lenkerebene kann somit kompakter gebaut werden als bei einer herkömmlichen Radaufhängung, ohne Einbußen bezüglich der Achskinematik, der Stabilität oder der Funktionalität der Radaufhängung in Kauf nehmen zu müssen.

Nach einer ersten Ausführungsform ist das Lenkgetriebe mit der ersten Spurstange wirkverbunden und die erste Spurstange mit dem Umlenkhebel wirkverbunden. Der Umlenkhebel dient hierbei zu einer zusätzlichen Lenkübersetzung. Durch diese zusätzliche Lenkübersetzung kann mittels der Radaufhängungsanordnung ein Lenkwinkel von wenigstens +/- 50° bis zu +/- 90° an dem mit dem Radträger verbundenen Rad realisiert werden, wenn die Radaufhängung in einem Fahrzeug verwendet wird.

Nach einer weiteren Ausführungsform ist der Umlenkhebel zweifach gebogen ausgeformt, wobei dessen Ausformung festgelegt ist durch einen Lenkbereich und eine Ausformung des Radträgers in einem Bereich des Umlenkhebels, welcher mit dem Radträger in einer Ebene angeordnet ist, sowie einen Federungsbereich und eine Ausformung des ersten Querlenkers in einem Bereich des Umlenkhebels, welcher mit dem ersten Querlenker in einer Ebene angeordnet ist. In anderen Worten weist der Umlenkhebel einen Bogen um den Radträger sowie einen Bogen um den ersten Querlenker auf.

Der Lenkbereich des Radträgers ist hierbei derjenige Bereich, den der Radträger bei dem Ausführen einer Schwenkbewegung, welche durch eine Lenkbewegung initiiert ist, maximal benötigt. Diese Lenkbewegung tritt üblicherweise bei einem Fahrzeugbetriebszustand auf. Der Lenkbereich ist ein Volumen, welches durch die maximal möglichen Bewegungen, z. B. Schwenkbewegungen, von dem Radträger virtuell ausgefüllt wird, und daher frei von Material bleiben muss, um Kollisionen der einzelnen Bauelemente zu vermeiden.

Der Federungsbereich des ersten Querlenkers ist hierbei derjenige Bereich, den der erste Querlenker bei einem Einfedern maximal benötigt. Das Einfedern tritt üblicherweise bei einem Fahrzeugbetriebszustand auf. Der Federungsbereich ist ein Volumen, welches durch die maximal möglichen Bewegungen, z. B. Einfederungsbewegungen, von dem ersten Querlenker virtuell ausgefüllt wird, und daher frei von Material bleiben muss, um Kollisionen der einzelnen Bauelemente zu vermeiden.

Die Ausformung des Umlenkhebels richtet sich somit zum einen nach dem Federungsbereich des ersten Querlenkers und nach dem Lenkbereich des Radträgers, zum anderen richtet sich die Ausformung des Umlenkhebels nach der Ausformung des Radträgers in demjenigen Bereich, der mit dem Umlenkhebel in einer Ebene liegt, und nach der Ausformung des ersten Querlenkers in demjenigen Bereich, der mit dem Umlenkhebel in einer Ebene liegt. Die Form des Lenkbereichs richtet sich selbstverständlich ebenfalls nach der Ausformung des Radträgers. Die Form des Federungsbereichs richtet sich selbstverständlich ebenfalls nach der Ausformung des ersten Querlenkers. Der Umlenkhebel ist somit derart ausgestaltet, dass es weder in Konstruktionslage noch in einem Fahrzeugbetriebszustand zu Kollisionen des Umlenkhebels mit dem Radträger und/ oder dem ersten Querlenker und/ oder weiteren Bauelementen der Radaufhängungsanordnung kommt. Durch diese angepasste Ausformung des Umlenkhebels kann im Vergleich zu einer herkömmlichen Radaufhängungsanordnung kompakter gebaut und Bauvolumen eingespart werden. Der zur Verfügung stehende Bauraum wird somit effizient genutzt.

Nach einer weiteren Ausführungsform ist die zweite Spurstange mittels eines ersten Kugelzapfens an dem Radträger gelagert ist und mittels eines zweiten Kugelzapfens an dem Umlenkhebel gelagert, wobei die Drehachsen der Kugelzapfen der zweiten Spurstange zueinander windschief sind.

Um den für die Radaufhängungsanordnung zur Verfügung stehenden Bauraum effizient und optimiert zu nutzen, wird die Lage dieser zwei Drehachsen der Kugelzapfen festgelegt durch einen Bewegungsbereich der zweiten Spurstange. Bei einem Fahrzeugbetriebszustand führt die zweite Spurstange eine durch die Lenkbewegung initiierte Bewegung durch. Die Lenkbewegung wird von dem Lenkgetriebe mittels der ersten Spurstange und mittels des Umlenkhebels an die zweite Spurstange weitergeleitet. Die zweite Spurstange gibt diese Lenkbewegung an den Radträger weiter. Die zwei Drehachsen der Kugelzapfen sind somit derart angeordnet, dass die zweite Spurstange diese Bewegung ungehindert durchführen kann und während eines Fahrzeugbetriebszustands, wenn die Radaufhängungsanordnung in einem Fahrzeug verwendet wird, nicht mit einem oder mehreren Bauelementen der Radaufhängungsanordnung wie z. B. dem Radträger, einem Gehäuse oder dem Umlenkhebel kollidiert.

Beispielsweise kann die zweite Spurstange in sich verdreht ausgeformt sein. Die in sich verdrehte Ausformung der zweiten Spurstange bedeutet hierbei, dass diejenigen Anbindungsstellen der zweiten Spurstange, an welchen die Kugelzapfen mit der Spurstange gekoppelt sind, nicht in dieselbe Richtung orientiert sind. Diese Ausformung wird durch die windschiefe Anordnung der Drehachsen der Kugelzapfen bedingt. Beispielsweise kann die zweite Spurstange zusätzlich oder alternativ dazu in einem mittigen Bereich zwischen den beiden Kugelzapfen verjüngt ausgeformt sein.

Nach einer weiteren Ausführungsform weist der zweite Querlenker einen radträgerseitigen Kinematikpunkt, einen Steg und eine Anbindungsstelle auf, wobei sich der Steg von dem radträgerseitigen Kinematikpunkt des zweiten Querlenkers zu der Anbindungsstelle des zweiten Querlenkers erstreckt, wobei mittels der Anbindungsstelle der zweite Querlenker mit der Pendelstütze verbunden ist.

Ein Kinematikpunkt ist hierbei ein Bereich des Querlenkers, an welchem dieser Querlenker mit anderen Bauelementen der Radaufhängung gelenkig verbunden werden kann. Eine gelenkige Verbindung zweier Bauelemente bezeichnet eine Verbindung der beiden Bauelemente mittels eines Gelenks so, dass die beiden Bauelemente um mindestens eine Drehachse relativ zueinander verdreht werden können. Es sind also gelenkige Verbindungen um genau eine Drehachse, um genau zwei Drehachsen und um genau drei Drehachsen möglich. Eine gelenkige Verbindung lässt keine translatorische Bewegung der beiden Bauelemente relativ zueinander zu. Der zweite Querlenker ist somit mittels des radträgerseitigen Kinematikpunktes gelenkig mit dem Radträger verbunden.

Der Steg des zweiten Querlenkers erstreckt sich von dem radträgerseitigen Kinematikpunkt des zweiten Querlenkers bis zu der Anbindungsstelle des zweiten Querlenkers mittels welcher die Pendelstütze mit dem zweiten Querlenker verbunden ist. Der Steg des zweiten Querlenkers ist schmaler und länger ausgestaltet als ein radträgerseitiges Ende eines herkömmlichen Querlenkers. Der Querlenker erhält dadurch eine Y-Form. Diese Ausgestaltung beeinträchtigt die Stabilität und die Funktionalität des zweiten Querlenkers jedoch nicht.

Nach einer weiteren Ausführungsform ist die Ausformung des Stegs des zweiten Querlenkers festgelegt durch den Lenkbereich des Radträgers. Die Ausformung kann zudem durch einen Schwenkbereich eines Rades festgelegt sein, welches bei der Verwendung der Radaufhängungsanordnung in einem Fahrzeug mit dem Radträger verbunden ist. Beispielsweise kann sich der Steg nahe dem Radträger verjüngen, so dass der Radträger, wenn ein maximaler Lenkwinkel eingeschlagen wird, nicht mit dem Steg des zweiten Querlenkers kollidiert.

Nach einer weiteren Ausführungsform weist der zweite Querlenker an seinem Steg eine Verbindungsstelle auf, mittels welcher der zweite Querlenker mit dem Federdämpfer verbunden ist. Diese Verbindungsstelle ist nahe dem radträgerseitigen Kinematikpunkt des zweiten Querlenkers angeordnet. Der Federdämpfer ist an seiner der Feder abgewandten Seite mit der Verbindungsstelle des zweiten Querlenkers verbunden. Die Positionierung der Verbindungsstelle richtet sich hierbei nach dem Lenkbereich des Radträgers, da es bei einem maximal eingestellten Lenkwinkel nicht zu einer Kollision des Radträgers oder eines mit dem Radträger verbundenen Rades mit dem Federdämpfer kommen darf. Beispielsweise kann sich die Verjüngung des Stegs von dem radträgerseitigen Kinematikpunkt des zweiten Querlenkers bis zu der Verbindungsstelle erstrecken.

Nach einer weiteren Ausführungsform ist der Umlenkhebel gelenkig an dem ersten Querlenker gelagert. Beispielsweise kann die gelenkige Lagerung mittels zweier gegeneinander verspannter Kegelrollenlager erfolgen.

Nach einer weiteren Ausführungsform weist die erste Querlenkerstrebe des ersten Querlenkers eine Krümmung in eine Raumrichtung auf, wobei diese Raumrichtung eine Hochachse zu einer Ebene, die durch die beiden karosserieseitigen Enden und durch das radträgerseitige Ende des ersten Querlenkers aufgespannt wird. Als Raumrichtung sind die Richtungsachsen eines kartesischen Koordinatensystems zu verstehen, d. h. die x-, y-, und z-Achsen. Die Kinematikpunkte der beiden Querlenkerstreben spannen die Ebene auf. Auf dieser Ebene ist die Raumrichtung, in die die wenigstens eine Querlenkerstrebe gekrümmt ist, beispielsweise senkrecht. In anderen Worten ist die Raumrichtung eine Hochachse, die z-Achse. Beispielsweise ist, bei der Verwendung des Querlenkers in der Achsanordnung eines Fahrzeugs, die Raumrichtung in Konstruktionslage senkrecht zu einer Fahrbahnebene.

Als eine Krümmung ist eine gebogene Ausformung der ersten Querlenkerstrebe des ersten Querlenkers zu verstehen, die ein Maximum aufweist. Dieses Maximum weist von sämtlichen Bereichen des ersten Querlenkers den größten Abstand zu der Ebene auf, die durch die die beiden karosserieseitigen Enden und durch das radträgerseitige Ende des ersten Querlenkers aufgespannt wird. Dieses Maximum weist zudem bei der Verwendung der Radaufhängungsanordnung in einem Fahrzeug von sämtlichen Bereichen des Querlenkers den größten Abstand zu einer Fahrbahnebene auf.

Die Krümmung ist bezüglich eines für die Radaufhängungsanordnung vorhandenen Bauraums derart ausgestaltet ist, dass keine Konflikte, z. B. Kollisionen, mit weiteren Bauelementen der Radaufhängungsanordnung entstehen, weder in Konstruktionslage noch in einem Fahrzeugbetriebszustand. Des Weiteren führt die Krümmung nicht zu Einbußen bezüglich der Bauelementstabilität und Bauelementkinematik des Querlenkers. Die Krümmung ist derart ausgestaltet, dass ein materialfreier Bereich geschaffen wird, durch welchen weitere Bauelemente der Radaufhängungsanordnung hindurchgeführt werden können. Vorteilhaft ist hierbei, dass der Querlenker und wenigstens ein weiteres Bauelement der Radaufhängungsanordnung des Fahrzeugs räumlich eng angeordnet werden können, so dass ein geringerer Bauraumbedarf entsteht als bei einem vollständig eben ausgestalteten ersten Querlenker.

Anhand der im Folgenden erläuterten Figur werden ein Ausführungsbeispiel und Details der Erfindung näher beschrieben. Es zeigt:

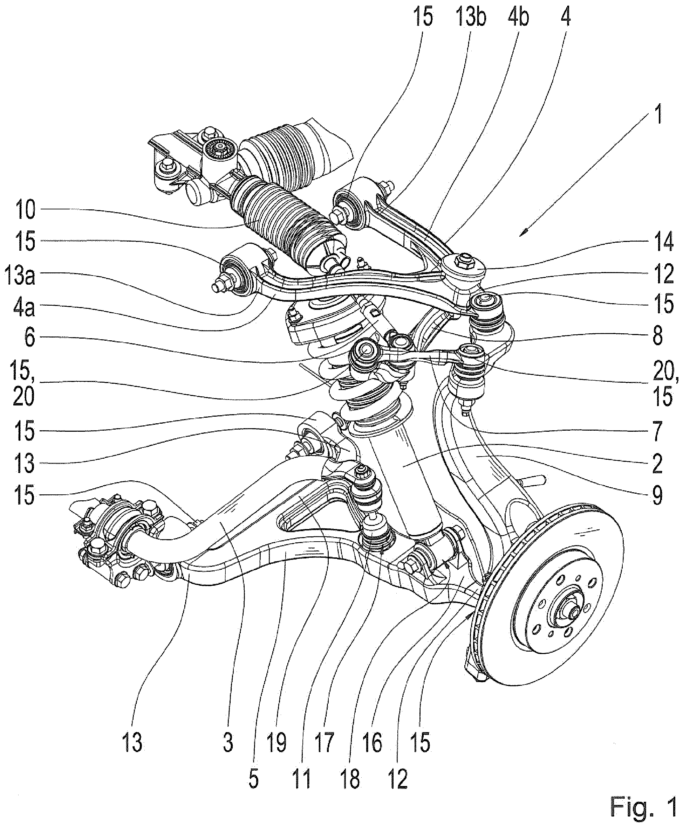

- Fig. 1: eine schematische Darstellung einer Radaufhängungsanordnung nach einem Ausführungsbeispiel,

Fig. 1 zeigt eine schematische Darstellung einer Radaufhängungsanordnung 1 nach einem Ausführungsbeispiel. Die Radaufhängungsanordnung 1 weist folgende Bauelemente auf: einen Federdämpfer 2, einen Stabilisator 3, einen ersten Querlenker 4, einen zweiten Querlenker 5, eine erste Spurstange 6, eine zweite Spurstange 7, einen Umlenkhebel 8, einen Radträger 9, ein Lenkgetriebe 10 und eine Pendelstütze 11. Dargestellt ist eine Konstruktionslage der Radaufhängungsanordnung 1.

Der erste Querlenker 4 ist als ein Dreiecksquerlenker ausgeformt und ist der obere Querlenker. Der erste Querlenker 4 weist eine erste Querlenkerstrebe 4a und eine zweite Querlenkerstrebe 4b auf. Zudem weist der erste Querlenker 4 ein radträgerseitiges Ende 12 und zwei karosserieseitige Enden 13a, 13b auf. Die erste Querlenkerstrebe 4a des ersten Querlenkers 4 wird begrenzt durch das radträgerseitige Ende 12 und eines der karosserieseitigen Enden 13a. Die zweite Querlenkerstrebe 4b des ersten Querlenkers 4 wird begrenzt durch das radträgerseitige Ende 12 und ein anderes der karosserieseitigen Enden 13b. Die beiden Querlenkerstreben 4a, 4b des ersten Querlenkers 4 sind an dem radträgerseitigen Ende 12 fest und permanent miteinander verbunden. An den karosserieseitigen Enden 13a, 13b des ersten Querlenkers 4 sind die beiden Querlenkerstreben 4a, 4b nicht miteinander verbunden. Zwischen dem karosserieseitigen Ende 13a der ersten Querlenkerstrebe 4a des ersten Querlenkers 4 und dem karosserieseitigen Ende 13b der zweiten Querlenkerstrebe 4b des ersten Querlenkers 4 ist somit ein materialfreier Bereich, d. h. ein materialfreies Volumen.

An dem karosserieseitigen Ende 13a der ersten Querlenkerstrebe 4a des ersten Querlenkers 4 weist der erste Querlenker 4 einen Kinematikpunkt 15 auf, der z. B. als Drehgelenk ausgeformt ist. An dem karosserieseitigen Ende 13b der zweiten Querlenkerstrebe 4b des ersten Querlenkers 4 weist der erste Querlenker 4 einen weiteren Kinematikpunkt 15 auf, der z. B. als Drehgelenk ausgeformt ist. Ein Kinematikpunkt 15 ist hierbei ein Bereich des Querlenkers 4, 5, an welchem dieser Querlenker 4, 5 mit anderen Bauelementen der Radaufhängung 1 gelenkig verbunden werden kann. Wird die Radaufhängungsanordnung 1 in einem Fahrzeug verwendet kann der erste Querlenker 4 an seinen karosserieseitigen Enden 13a, 13b mittels der Kinematikpunkte 15 mit beispielsweise einer Fahrzeugkarosserie oder einem Fahrzeugrahmen gelenkig verbunden werden. Die Drehachsen der Gelenke der beiden karosserieseitigen Kinematikpunkte 15 des ersten Querlenkers 4 sind koaxial zueinander. An dem radträgerseitigen Ende 12 des ersten Querlenkers 4 weist dieser einen Kinematikpunkt 15 auf, der z. B. als Drehgelenk ausgeformt ist. Mittels dieses radträgerseitigen Kinematikpunktes 15 ist der erste Querlenker 4 mit dem Radträger 9 gelenkig verbunden. Der erste Querlenker 4 begrenzt die Radaufhängungsanordnung 1 nach oben hin.

In dem materialfreien Raum zwischen den beiden karosserieseitigen Enden 13a, 13b des ersten Querlenkers 4 ist ein Teilbereich des Lenkgetriebes 10 angeordnet. Der Teilbereich des Lenkgetriebes 10 ist hierbei derart zwischen den beiden karosserieseitigen Enden 13a, 13b des ersten Querlenkers 4 angeordnet, dass dem Lenkgetriebe 10 sowohl in der Konstruktionslage als auch in einem Fahrzeugbetriebszustand, wenn die Radaufhängungsanordnung 1 in einem Fahrzeug verwendet wird, genügend Raum zur Verfügung steht, so dass das Lenkgetriebe 10 nicht mit dem ersten Querlenker 4 oder einem anderen Bauelement der Radaufhängungsanordnung 1 kollidiert. Der Teilbereich des Lenkgetriebes 10 ist hierbei rein räumlich zwischen den beiden karosserieseitigen Enden 13a, 13b des ersten Querlenkers 4 angeordnet, es besteht keine funktionelle Verbindung. Das Lenkgetriebe 10 liegt mit dem ersten Querlenker 4 in einer Ebene.

Das Lenkgetriebe 10 ist mit der ersten Spurstange 6 wirkverbunden. Eine durch das Lenkgetriebe 10 eingebrachte Lenkbewegung wird somit an die erste Spurstange 6 weitergeleitet. Die erste Spurstange 6 ist in einem Teilbereich unterhalb der ersten Querlenkerstrebe 4a des ersten Querlenkers 4 angeordnet. Die erste Querlenkerstrebe 4a überspannt somit den Teilbereich der ersten Spurstange 6. Die erste Querlenkerstrebe 4a weist eine Krümmung auf, welche ein Maximum aufweist. Die Krümmung der ersten Querlenkerstrebe 4a ist in Richtung einer Hochachse orientiert. Das Maximum der Krümmung der ersten Querlenkerstrebe 4a weist somit von allen Punkten auf dem ersten Querlenker 4 den größten Abstand zu dem zweiten Querlenker 5 auf. Die Krümmung der ersten Querlenkerstrebe 4a richtet sich hierbei sowohl nach dem Raumbedarf der ersten Spurstange 6 in der Konstruktionslage als auch nach dem Raumbedarf der ersten Spurstange 6 in einem Fahrzeugbetriebszustand, wenn die Radaufhängungsanordnung 1 in einem Fahrzeug verwendet wird. Die Krümmung ist also so ausgeformt, dass es nicht zu einer Kollision der ersten Spurstange 6 mit dem ersten Querlenker 4 kommen kann.

Die erste Spurstange 6 ist mit dem Umlenkhebel 8 wirkverbunden. Eine Lenkbewegung wird somit von der ersten Spurstange 6 an den Umlenkhebel 8 weitergeleitet. Der Umlenkhebel 8 führt eine zusätzliche Lenkübersetzung der Lenkbewegung durch. Der Umlenkhebel 8 ist mittels einer gelenkigen Lagerung 14 an dem ersten Querlenker 4 beweglich gelagert. Des Weiteren ist der Umlenkhebel 8 zweifach gebogen ausgeformt. Diese Ausformung ist zum einen festgelegt durch einen Lenkbereich und eine Ausformung des Radträgers 9 in einem Bereich des Umlenkhebels 8, der mit dem Radträger 9 in einer Ebene angeordnet ist. Durch die Ausformung des Umlenkhebels 8 wird in einem Fahrzeugbetriebszustand, wenn die Radaufhängungsanordnung 1 in einem Fahrzeug verwendet wird, gewährleistet, dass der Radträger 9 genügend Raum hat, eine Schwenkbewegung durchzuführen, welche durch die von dem Lenkgetriebe 10 in die Radaufhängungsanordnung 1 eingebrachte Lenkbewegung initiiert wird. Diese Ausformung des Umlenkhebels 8 ist zum anderen festgelegt durch einen Federungsbereich und eine Ausformung des ersten Querlenkers 4 in einem Bereich des Umlenkhebels 8, welcher mit dem ersten Querlenker 4 in einer Ebene angeordnet ist. Durch die Ausformung des Umlenkhebels 8 wird in einem Fahrzeugbetriebszustand, wenn die Radaufhängungsanordnung 1 in einem Fahrzeug verwendet wird, gewährleistet, dass der erste Querlenker 4 genügend Raum hat, eine Federungsbewegung durchzuführen. In anderen Worten weist der Umlenkhebel 8 einen Bogen um den Radträger 9 sowie einen Bogen um den ersten Querlenker 4 auf.

Mittels eines Kinematikpunktes 15 ist der Umlenkhebel 8 mit der zweiten Spurstange 7 gelenkig verbunden. Eine Lenkbewegung wird somit von dem Umlenkhebel 8 an die zweite Spurstange 7 weitergeleitet. Diese gelenkige Verbindung der zweiten Spurstange 7 mit dem Umlenkhebel 8 ist als ein Kugelzapfen 20 ausgeformt. Die zweite Spurstange 7 ist an einem weiteren Kinematikpunkt 15 mit dem Radträger 9 gelenkig wirkverbunden. Diese gelenkige Verbindung ist ebenfalls als ein Kugelzapfen 20 ausgeformt. Die zweite Spurstange 7 ist hierbei in einem mittigen Bereich zwischen den beiden Kugelzapfen 20 verjüngt ausgestaltet. Die Drehachse des Kugelzapfens 20, der die zweite Spurstange 7 mit dem Umlenkhebel 8 verbindet, ist windschief zu der Drehachse des Kugelzapfens 20, der die zweite Spurstange 7 mit dem Radträger 9 gelenkig verbindet. Eine Lenkbewegung wird von der zweiten Spurstange 7 an den Radträger 9 weitergeleitet, woraufhin der Radträger 9 eine Schwenkbewegung nach rechts oder links durchführt. Wird die Radaufhängungsanordnung in einem Fahrzeug verwendet, kann durch diese Schwenkbewegung an einem mit dem Radträger 9 verbundenen Rad ein Lenkwinkel von wenigstens +/- 50° bis zu +/- 90° eingestellt werden.

Der zweite Querlenker 5 stellt einen unteren Querlenker dar und ist als Dreiecksquerlenker ausgeformt. Der zweite Querlenker 5 ist zudem ähnlich einer Y-Form ausgeformt. Der zweite Querlenker 5 weist ein radträgerseitiges Ende 12 und zwei karosserieseitige Enden 13 auf. Das radträgerseitige Ende 12 des zweiten Querlenkers 5 weist einen Kinematikpunkt 15 auf. Der Radträger 9 ist mit dem zweiten Querlenker 5 mittels dieses Kinematikpunktes 15, der als Kugelzapfen oder Kugelgelenk ausgeformt ist, gelenkig verbunden. Jedes karosserieseitige Ende 13 weist einen Kinematikpunkt 15 auf. Mittels dieser Kinematikpunkte kann sich der zweite Querlenker 5, wenn die Radaufhängungsanordnung 1 in einem Fahrzeug verwendet wird, an einer Fahrzeugkarosserie abstützen. Der zweite Querlenker 5 ist von dem ersten Querlenker 4 verschieden ausgeformt. Nahe der beiden karosserieseitigen Enden 13 des zweiten Querlenkers 5 weist der zweite Querlenker 5 ein Verbindungselement 19 auf.

Außerdem weist der zweite Querlenker 5 einen Steg 16 auf. Der Steg 16 erstreckt sich von dem Kinematikpunkt 15 des radträgerseitigen Endes 12 bis zu einer Anbindungsstelle 17, an welcher die Pendelstütze 11 mit dem zweiten Querlenker 5 verbunden ist. Der Steg 16 des zweiten Querlenkers 5 weist zudem eine Verbindungsstelle 18 auf, an welcher der Federdämpfer 2 mit dem zweiten Querlenker 5 verbunden ist. Der Steg 16 weist eine Verjüngung auf, welche sich von der Verbindungsstelle 18 bis zu dem Kinematikpunkt 15 des radträgerseitigen Endes 12 des zweiten Querlenkers 5 erstreckt. An der Verbindungsstelle 18 ist der Steg also breiter als an dem Kinematikpunkt 15 des radträgerseitigen Endes 12 des zweiten Querlenkers 5. Die Ausformung des Stegs 16 richtet sich nach dem Lenkbereich des Radträgers 9. Wenn in einem Fahrzeugbetriebszustand ein maximaler Lenkwinkel an dem Radträger 9 eingestellt wird, bietet die Ausformung des Stegs 16 genug Raum, dass es nicht zu einer Kollision des Radträgers 9 oder eines mit dem Radträger 9 verbundenen Rades, wenn die Radaufhängungsanordnung 1 in einem Fahrzeug verwendet wird, mit dem Steg 16 des zweiten Querlenkers 5 kommt.

An der Anbindungsstelle 17 des zweiten Querlenkers 5 ist die Pendelstütze 11 mit dem zweiten Querlenker 5 verbunden. Die Pendelstütze 11 ist in der dargestellten Konstruktionslage senkrecht auf dem zweiten Querlenker 5 angeordnet. Mit der Pendelstütze 11 ist der Stabilisator 3 verbunden. Der Stabilisator 3 ist somit beabstandet zu dem zweiten Querlenker 5 in Richtung des ersten Querlenkers 4 versetzt angeordnet. Der Stabilisator 3 ist derart ausgeformt, dass er den für die Radaufhängungsanordnung 1 zu Verfügung stehenden Bauraum effizient nutzt. Die Ausformung des Stabilisators 3 richtet sich somit nach dem Bauraumbedarf der übrigen Bauelemente der Radaufhängungsanordnung 1 sowohl in der Konstruktionslage als auch in dem Fahrzeugbetriebszustand, wenn die Radaufhängungsanordnung 1 in einem Fahrzeug verwendet wird.

An der Verbindungsstelle 18 ist der Federdämpfer 2 mit dem zweiten Querlenker 5 verbunden. Der Federdämpfer 2 ist hierbei handelsüblich ausgeformt, wobei die Verbindungsstelle 18 den Federdämpfer 2 nach unten hin begrenzt. Der Federdämpfer 2 ist nicht senkrecht auf dem zweiten Querlenker 5 positioniert, sondern weicht in einem spitzen Winkel von der Senkrechten ab. Der Federdämpfer 2 ist also schräg zu dem unteren Querlenker 5 angeordnet. Der Federdämpfer 2 weist einen Verbindungspunkt auf, welcher der Verbindungsstelle 18 gegenüber liegt und den Federdämpfer 2 nach oben hin begrenzt. An diesem Verbindungspunkt kann sich der Federdämpfer 2, wenn die Radaufhängungsanordnung 1 in einem Fahrzeug verwendet wird, an einer Fahrzeugkarosserie abstützen.

Bei einer Betrachtung der Radaufhängungsanordnung 1 in ihrer Gesamtheit ist jedes Bauelement der Radaufhängungsanordnung 1 derart in der Radaufhängungsanordnung 1 angeordnet, dass der zur Verfügung stehende Bauraum effizient genutzt wird. Die einzelnen Bauelemente der Radaufhängungsanordnung 1 sind somit eng zueinander verbaut, wobei der Abstand der Bauelemente zueinander sich nach einem Raumbedarf jedes einzelnen Bauelements sowohl in einer Konstruktionslage als auch in einem Fahrzeugbetriebszustand richtet.

Die hier dargestellten Ausführungsbeispiele sind nur beispielhaft gewählt. Beispielsweise kann der Radträger anders als dargestellt ausgeformt sein. Auch der zweite Querlenker kann eine andere Ausformung im Bereich seines Steges aufweisen. Beispielsweise können die Kinematikpunkte durch andere geeignete Gelenke ausgeformt sein. Beispielsweise kann die Krümmung der ersten Querlenkerstrebe des ersten Querlenkers anders verlaufen als dargestellt.

### Bezugszeichen

- 1: Radaufhängungsanordnung
- 2: Federdämpfer
- 3: Stabilisator
- 4: erster Querlenker
- 4a: erste Querlenkerstrebe
- 4b: zweite Querlenkerstrebe
- 5: zweiter Querlenker
- 6: erste Spurstange
- 7: zweite Spurstange
- 8: Umlenkhebel
- 9: Radträger
- 10: Lenkgetriebe
- 11: Pendelstütze
- 12: radträgerseitiges Ende
- 13: karosserieseitiges Ende
- 13a: karosserieseitiges Ende
- 13b: karosserieseitiges Ende
- 14: gelenkige Lagerung
- 15: Kinematikpunkt
- 16: Steg
- 17: Anbindungsstelle
- 18: Verbindungsstelle
- 19: Verbindungselement
- 20: Kugelzapfen

## Patentansprüche

1. Radaufhängungsanordnung (1) für ein Fahrzeug, umfassend einen Federdämpfer (2), einen ersten Querlenker (4), welcher eine erste Querlenkerstrebe (4a) und eine zweite Querlenkerstrebe (4b) aufweist, einen zweiten Querlenker (5), eine erste Spurstange (6), eine zweite Spurstange (7), einen Umlenkhebel (8), einen Radträger (9), ein Lenkgetriebe (10) und eine Pendelstütze (11), wobei jeder Querlenker (4, 5) ein radträgerseitiges Ende (12) und zwei karosserieseitige Enden (13, 13a, 13b) aufweist, **dadurch gekennzeichnet, dass** das Lenkgetriebe (10) in einer Ebene mit dem ersten Querlenker (4) angeordnet ist, wobei das Lenkgetriebe (10) in einem Teilbereich zwischen einem karosserieseitigen Ende (13a) der ersten Querlenkerstrebe (4a) des ersten Querlenkers (4) und einem karosserieseitigen Ende (13b) der zweiten Querlenkerstrebe (4b) des ersten Querlenkers (4) angeordnet ist.

2. Radaufhängungsanordnung (1) nach Anspruch 1, **dadurch gekennzeichnet, dass** das Lenkgetriebe (10) mit der ersten Spurstange (6) wirkverbunden ist und dass die erste Spurstange (6) mit dem Umlenkhebel (8) wirkverbunden ist.

3. Radaufhängungsanordnung (1) nach einem der vorherigen Ansprüche, **dadurch gekennzeichnet, dass** der Umlenkhebel (8) zweifach gebogen ausgeformt ist, wobei dessen Ausformung festgelegt ist durch einen Lenkbereich und eine Ausformung des Radträgers (9) in einem Bereich des Umlenkhebels (8), welcher mit dem Radträger (9) in einer Ebene angeordnet ist, sowie einen Federungsbereich und eine Ausformung des ersten Querlenkers (4) in einem Bereich des Umlenkhebels (8), welcher mit dem ersten Querlenker (4) in einer Ebene angeordnet ist.

4. Radaufhängungsanordnung (1) nach einem der vorherigen Ansprüche, **dadurch gekennzeichnet, dass** die zweite Spurstange (7) mittels eines ersten Kugelzapfens (20) an dem Radträger (9) gelagert ist und mittels eines zweiten Kugelzapfens (20) an dem Umlenkhebel (8) gelagert ist, wobei die Drehachsen der Kugelzapfen (20) der zweiten Spurstange (7) zueinander windschief sind.

5. Radaufhängungsanordnung (1) nach einem der vorherigen Ansprüche, **dadurch gekennzeichnet, dass** der zweite Querlenker (5) einen radträgerseitigen Kinematikpunkt (15), einen Steg (16) und eine Anbindungsstelle (17) aufweist, wobei sich der Steg (16) von dem radträgerseitigen Kinematikpunkt (15) des zweiten Querlenkers (5) zu der Anbindungsstelle (17) des zweiten Querlenkers (5) erstreckt, wobei mittels der Anbindungsstelle (17) der zweite Querlenker (5) mit der Pendelstütze (11) verbunden ist.

6. Radaufhängungsanordnung (1) nach Anspruch 5, **dadurch gekennzeichnet, dass** die Ausformung des Stegs (16) des zweiten Querlenkers (5) festgelegt ist durch den Lenkbereich des Radträgers (9).

7. Radaufhängungsanordnung (1) nach Anspruch 5 oder 6, **dadurch gekennzeichnet, dass** der zweite Querlenker (5) an seinem Steg (16) eine Verbindungsstelle (18) aufweist, mittels welcher der zweite Querlenker (5) mit dem Federdämpfer (2) verbunden ist.

8. Radaufhängungsanordnung (1) nach einem der vorherigen Ansprüche, **dadurch gekennzeichnet, dass** der Umlenkhebel (8) gelenkig an dem ersten Querlenker (4) gelagert ist.

9. Radaufhängungsanordnung (1) nach einem der vorherigen Ansprüche, **dadurch gekennzeichnet, dass** die erste Querlenkerstrebe (4a) des ersten Querlenkers (4) eine Krümmung in eine Raumrichtung aufweist, wobei diese Raumrichtung eine Hochachse zu einer Ebene ist, die durch die beiden karosserieseitigen Enden (13a, 13b) und durch das radträgerseitige Ende (12) des ersten Querlenkers (4) aufgespannt wird.

## Claims

1. Wheel suspension arrangement (1) for a vehicle, comprising a spring damper (2), a first wishbone (4) which has a first wishbone strut (4a) and a second wishbone strut (4b), a second wishbone (5), a first track rod (6), a second track rod (7), a relay lever (8), a wheel support (9), a steering gear (10) and a hinged support (11), each wishbone (4, 5) having a wheel support-side end (12) and two vehicle body-side ends (13, 13a, 13b), **characterized in that** the steering gear (10) is arranged in one plane with the first wishbone (4), the steering gear (10) being arranged in a part region between a vehicle body-side end (13a) of the first wishbone strut (4a) of the first wishbone (4) and a vehicle body-side end (13b) of the second wishbone strut (4b) of the first wishbone (4).

2. Wheel suspension arrangement (1) according to Claim 1, **characterized in that** the steering gear (10) is operatively connected to the first track rod (6), and **in that** the first track rod (6) is operatively connected to the relay lever (8).

3. Wheel suspension arrangement (1) according to either of the preceding claims, **characterized in that** the relay lever (8) is formed with two curves, its formed portion being defined by way of a steering range and a formed portion of the wheel support (9) in a region of the relay lever (8), which region is arranged in one plane with the wheel support (9), and a suspension region and a formed portion of the first wishbone (4) in a region of the relay lever (8), which region is arranged in one plane with the first wishbone (4).

4. Wheel suspension arrangement (1) according to one of the preceding claims, **characterized in that** the second track rod (7) is mounted on the wheel support (9) by means of a first ball pivot (20) and is mounted on the relay lever (8) by means of a second ball pivot (20), the rotational axes of the ball pivots (20) of the second track rod (7) being skewed with respect to one another.

5. Wheel suspension arrangement (1) according to one of the preceding claims, **characterized in that** the second wishbone (5) has a wheel support-side kinematic point (15), a web (16) and an attachment point (17), the web (16) extending from the wheel support-side kinematic point (15) of the second wishbone (5) to the attachment point (17) of the second wishbone (5), the second wishbone (5) being connected to the hinged support (11) by means of the attachment point (17).

6. Wheel suspension arrangement (1) according to Claim 5, **characterized in that** the formed portion of the web (16) of the second wishbone (5) is defined by way of the steering range of the wheel support (9).

7. Wheel suspension arrangement (1) according to Claim 5 or 6, **characterized in that**, on its web (16), the second wishbone (5) has a connecting point (18), by means of which the second wishbone (5) is connected to the spring damper (2).

8. Wheel suspension arrangement (1) according to one of the preceding claims, **characterized in that** the relay lever (8) is mounted in an articulated manner on the first wishbone (4).

9. Wheel suspension arrangement (1) according to one of the preceding claims, **characterized in that** the first wishbone strut (4a) of the first wishbone (4) has a curvature in one spatial direction, the said spatial direction being a vertical axis with respect to a plane which is defined by way of the two vehicle body-side ends (13a, 13b) and by way of the wheel support-side end (12) of the first wishbone (4).

## Revendications

1. Dispositif de suspension de roues (1) destiné à un véhicule, comprenant un amortisseur à ressort (2), un premier bras oscillant (4), lequel comporte une première entretoise de bras oscillant (4a) et une deuxième entretoise de bras oscillant (4b), un deuxième bras oscillant (5), une première barre d'accouplement (6), une deuxième barre d'accouplement (7), un levier de renvoi (8), un support de roue (9), un mécanisme de direction (10) et un support pendulaire (11), chaque bras oscillant (4, 5) comportant une extrémité (12) côté support de roue et deux extrémités (13, 13a, 13b) côté carrosserie, **caractérisé en ce que** le mécanisme de direction (10) est placé dans un plan avec le premier bras oscillant (4), le mécanisme de direction (10) étant placé dans une zone partielle entre une extrémité (13a) côté carrosserie de la première entretoise de bras oscillant (4a) du premier bras oscillant (4) et une extrémité (13b) côté carrosserie de la deuxième entretoise de bras oscillant (4b) du premier bras oscillant (4).

2. Dispositif de suspension de roues (1) selon la revendication 1, **caractérisé en ce que** le mécanisme de direction (10) est en liaison active avec la première barre d'accouplement (6) et **en ce que** la première barre d'accouplement (6) est en liaison active avec le levier de renvoi (8).

3. Dispositif de suspension de roues (1) selon l'une quelconque des revendications précédentes, **caractérisé en ce que** le levier de renvoi (8) est façonné de manière doublement coudée, son façonnage étant déterminé par une zone de direction et un façonnage du support de roue (9) dans une zone du levier de renvoi (8), laquelle est placée dans un plan avec le support de roue (9), ainsi que par une zone de suspension et un façonnage du premier bras oscillant (4) dans une zone du levier de renvoi (8), laquelle est placée dans un plan avec le premier bras oscillant (4).

4. Dispositif de suspension de roues (1) selon l'une quelconque des revendications précédentes, **caractérisé en ce que** la deuxième barre d'accouplement (7) est logée à l'aide d'un premier pivot sphérique (20) sur le support de roue (9) et à l'aide d'un deuxième pivot sphérique (20) sur le levier de renvoi (8), les axes de rotation du pivot sphérique (20) de la deuxième barre d'accouplement (7) étant placés en biais l'un par rapport à l'autre.

5. Dispositif de suspension de roues (1) selon l'une quelconque des revendications précédentes, **caractérisé en ce que** le deuxième bras oscillant (5) comporte un point cinématique (15) côté support de roue, un listel (16) et une zone de liaison (17), le listel (16) s'étendant du point cinématique (15) côté support de roue du deuxième bras oscillant (5) vers la zone de liaison (17) du deuxième bras oscillant (5), à l'aide de la zone de liaison (17) le deuxième bras oscillant (5) étant relié avec le support pendulaire (11).

6. Dispositif de suspension de roues (1) selon la revendication 5, **caractérisé en ce que** le façonnage du listel (16) du deuxième bras oscillant (5) est déterminé par la zone de direction du support de roue (9).

7. Dispositif de suspension de roues (1) selon la revendication 5 ou 6, **caractérisé en ce que** le deuxième bras oscillant (5) comporte sur son listel (16) une zone de raccordement (18) à l'aide de laquelle le deuxième bras oscillant (5) est relié avec l'amortisseur à ressort (2) .

8. Dispositif de suspension de roues (1) selon l'une quelconque des revendications précédentes, **caractérisé en ce que** le levier de renvoi (8) est logé de manière articulée sur le premier bras oscillant (4).

9. Dispositif de suspension de roues (1) selon l'une quelconque des revendications précédentes, **caractérisé en ce que** la première entretoise de bras oscillant (4a) du premier bras oscillant (4) comporte une courbure dans une direction spatiale, ladite dimension spatiale étant un axe vertical par rapport à un plan qui est défini par les deux extrémités (13a, 13b) côté carrosserie et par l'extrémité (12) côté support de roue du premier bras oscillant (4).
